Europäisches Patentamt

European Patent Office

Office européen des brevets

(19)

(11) **EP 0 818 369 B1**

(12) **EUROPÄISCHE PATENTSCHRIFT**

(45) Veröffentlichungstag und Bekanntmachung des Hinweises auf die Patenterteilung:
**08.09.2004 Patentblatt 2004/37**

(51) Int Cl.$^7$: **B60R 21/32**

(21) Anmeldenummer: **97110957.4**

(22) Anmeldetag: **02.07.1997**

(54) **Verfahren zur Auslösung eines passiven Insassen-Schutzsystems für Kraftfahrzeuge und passives Insassen-Schutzsystem für Kraftfahrzeuge**

Method to trigger a passive passenger protection system for a motor vehicle and passive passenger protection system for a motor vehicle

Procédé de déclenchement d'un système de protection passif pour les passagers d'un véhicule automobile et système de protection passif pour les passagers d'un véhicule automobile

(84) Benannte Vertragsstaaten:
**DE ES FR GB IT SE**

(30) Priorität: **11.07.1996 DE 19627877**

(43) Veröffentlichungstag der Anmeldung:
**14.01.1998 Patentblatt 1998/03**

(73) Patentinhaber: **Conti Temic Microelectronic GmbH**
**90411 Nürnberg (DE)**

(72) Erfinder: **Schäfer, Gerhard, Dr.**
**74189 Weinsberg (DE)**

(56) Entgegenhaltungen:
**DE-A- 3 913 628        DE-A- 4 319 001**
**DE-A- 4 409 019        DE-A- 4 447 174**
**US-A- 5 068 640        US-A- 5 146 104**
**US-A- 5 204 547**

EP 0 818 369 B1

**Beschreibung**

Die Erfindung betrifft ein Verfahren zur Auslösung eines passiven Insassen-Schutzsystems für Kraftfahrzeuge gemäß dem Oberbegriff des Patentanspruchs 1, sowie ein passives Insassenschutzsystem gemäß dem Oberbegriff des Anspruchs 3.

Die Merkmale des jeweiligen Oberbegriff sind aus der DE 44 47 174 A1 bekannt.

Bei Insassen-Schutzsystemen für Kraftfahrzeuge, wie beispielsweise Airbagsysteme oder Gurtstraffer, wird eine hohe Systemzuverlässigkeit verlangt, da sie besonders sicherheitskritisch sind.

Airbag-Systeme weisen üblicherweise für jeden Airbag eine Auslöseschaltung mit einem den Airbag betätigenden Zündmittel, der sogenannten Zündpille auf, die in Reihe zu einem steuerbaren Schalter bzw. aus Sicherheitsgründen in Reihe zwischen zwei steuerbaren Schaltern liegt. Eine mit Beschleunigungsaufnehmern zusammenwirkende Steuereinheit aktiviert im Falle eines gefährlichen Aufpralls die Zündmittel, indem es die in der Auslöseschaltung befindlichen steuerbaren Schalter mittels eines Auslösesignals schließt.

Ferner ist es bekannt, im Falle des Ausfalls des Bordnetzes des Kraftfahrzeuges bzw. bei einer Funktionsstörung im Bordnetz einen Sicherheitskondensator (Autarkiekondensator) vorzusehen, der in einem solchen Fall die Versorgung des Zündmittels mit elektrischer Energie sicherstellt. Ein solcher Autarkiekondensator ist aus der DE 39 13 628 A 1 bekannt, der nicht nur das Zündmittel mit dem hierfür erforderlichen Auslösestrom versorgt, sondern gleichzeitig auch die Auslöseschaltung für das Zündmittel. Schließlich wird dieser Kondensator ständig auf seinen Ladezustand überprüft, um dessen Funktionssicherheit sicherzustellen.

Des weiteren ist aus der DE 44 09 019 ein Auslöseverfahren für einen Zünder in einem Airbag bekannt, bei dem zwei Kondensatoren vom Bordnetz des Kraftfahrzeuges geladen werden. Diese beiden Kondensatoren sind in Reihe zu den Zündmittel geschaltet, so dass im Falle eines Aufpralls über einen geschlossenen Schalter genügend Energie in kürzester Zeit dem Zündmittel zugeführt wird.

Weiterhin ist aus der schon oben genannten DE 43 19 001 bekannt, anstatt der gleichzeitigen Verwendung eines einzigen Autarkiekondensators für mehrere Zündmittel einer Insassen-Schutzvorrichtung, für jedes Zündmittel jeweils einen Autarkiekondensator vorzusehen. Als Nachteil des gleichzeitigen Einsatzes eines einzigen Autarkiekondensators für mehrere Zündmittel wird in dieser Druckschrift angegeben, dass Probleme insofern auftreten, dass die Widerstandswerte der Zündmittel nicht ausgeglichen sind und bei Kurzschluß an einem der Zündmittel das Insassen-Schutzsystem nicht ausgelöst werden kann.

Die bisher übliche Ausstattung eines Kraftfahrzeuges mit zwei Airbags und zwei Gurtstrammern erfordert deshalb vier Endstufen und vier Autarkiekondensatoren für die Energiespeicherung. Da jedoch zunehmend auch Seitenairbags zum Ausrüstungsstandard werden, würde sich die Zahl der Endstufen und der Autarkiekondensatoren auf sechs erhöhen. Dies führt zu einer hohen Anzahl an externen Bauelementen, die ein solches Sicherheitssystem wesentlich verteuern.

Weiterhin ist aus der DE 44 47 174 A1 eine Sicherheitseinrichtung mit zwei aus einem Autarkiekondensator mit Zündenergie zu versorgenden Zündpillen bekannt, bei der eine zuverlässige Betriebsweise dadurch sichergestellt wird, dass charakteristische Fehlerzustände (Kurzschlüsse etc.) zusammen mit gegenwirkenden Steuerstrategien abgespeichert werden und im Fehlerfall die jeweils zugeordnete Steuerstrategie zur Aktivierung der Rückhaltemittel angewandt wird. Jede Steuerstrategie entspricht hierbei einem Satz von Ansteuersignalen für insgesamt sechs Schaltelemente. In dieser Druckschrift kommt das Prinzip der Wechselstromzündung zur Anwendung, bei der die Zündung der entsprechenden Zündpille durch häufiges Umladen eines zusätzlich vorhandenen und in Serie zur Zündpille geschalteten Kondensators erreicht wird. Der für dieses Umladen erforderliche Wechselstrom wird durch eine getaktete Ansteuerung der entsprechenden Schaltelemente erzeugt.

Bei allen genannten Druckschriften wird jedoch dem Zündmittel, also der Zündpille des Airbags, weit mehr Energie angeboten, als für eine sichere Zündung erforderlich ist und nicht lediglich aus Gründen der Betriebssicherheit begründbar ist. Der Widerstand einer Zündpille kann beispielsweise einen Wert zwischen 1,6 und 6,6 Ohm annehmen, so dass die im Autarkiekondensator gespeicherte Energie für den größten Widerstand einer Zündpille auszulegen ist. Die Zündenergie für eine solche Zündpille entspricht beispielsweise einem Strom von 2A für die Dauer von 6ms. Wird dabei ein Kondensator mit einer Kapazität C = 2200µF mit einer Ladespannung von 27V geladen, wird ein maximaler Anfangsstrom von 16,8A fließen, wenn der Widerstandswert der Zündpille zwischen 1,6 und 6,6 Ohm liegt. Dies führt zu einer großen Chipfläche der für die Auslöseschaltung benötigten Endstufen-Transistoren, da sich deren Flächen proportional zum Anfangsstrom verhalten.

Die Aufgabe der Erfindung liegt daher darin, ein Verfahren zur Auslösung eines passiven Insassen-Schutzsystems und ein passives Insassenschutzsystem der eingangs genannten Art anzugeben, das mit wenigen Bauteilen auskommt und zu kleinen Chipflächen der in der Auslöseschaltung verwendeten Leistungsendstufentransistoren führt.

Diese Aufgabe wird durch die Merkmale der Ansprüche 1 und 3 gelöst Hiernach erzeugt ein einziger Autarkiekondensator gleichzeitig die Auslöseströme für mehrere Zündmittel. Dabei werden die Auslöseströme eines jeden Zündmittels derart pulsweitenmoduliert, dass die für das jeweilige Zündmittel individuell erforderliche Zünd-energie über das Puls-Pausenverhältnis des Auslösestroms eingestellt wird. Beim erfindungsgemäßen Insassenschutzsystem nach Anspruch 3 ist hierzu in Reihe zu jedem Zündmittel wenigstens ein steuerbarer Schalter, insbesondere ein Endstufentransistor, geschaltet und ferner eine Ansteuerschaltung vorgesehen, die die steuerbaren Schalter jeweils mit einem entsprechend pulsweitenmodulierten Signal ansteuert.

Hiermit wird das Ziel der Erfindung, den externen Bauteileaufwand zu reduzieren, erreicht und gleichzeitig eine besser angepasste Energieverteilung an in ihrem Widerstandswert sich unterscheidende Zündmittel erzielt, so daß es möglich ist, ohne weiteres einen Autarkiekondensator gleichzeitig für vier Zündmittel zu verwenden.

Der wesentlichste Unterschied zum Stand der Technik besteht darin, dass die den Auslösestromkreis schließenden Schalter derart intermittierend gesteuert werden, dass der Stromverlauf des Auslösestromes so zerhackt wird, dass die für das jeweilige Zündmittel individuell erforderliche Zündenergie über das Puls-Pausenverhältnis des Auslösestroms eingestellt wird, um dadurch eine sinnvolle Energieverteilung zu erreichen.

Gemäß einer vorteilhaften Weiterbildung des erfindungsgemäßen Verfahrens wird während des Betriebs des Kraftfahrzeuges der elektrische Widerstand jedes Zündmittels bestimmt, um hieraus die für das jeweilige Zündmittel individuell erforderliche Zündenergie als Puls-Pausenverhältnis für den Auslösestrom festzulegen.

Die Messung des Widerstandes der Zündmittel gehört in der Regel zur Funktionsüberprüfung des Insassen-Schutzsystems, so dass aufgrund des bestimmten Widerstandswertes für jedes Zündmittel individuell die erforderliche Zündenergie ohne zusätzlichen Hardware-Aufwand festlegbar ist.

Gemäß einer vorteilhaften Weiterbildung der erfindungsgemäßen Vorrichtung weist die Ansteuerschaltung zur Bestimmung des elektrischen Widerstandes jedes Zündmittels Mittel zur Beaufschlagung des jeweiligen Zündmittels mit einem Messstrom auf, wobei jedoch die dem Zündmittel zugeführte Energie unter der für eine Zündung erforderlichen Mindestenergie liegt.

Schließlich ist bei einer weiteren Ausführungsform der Erfindung der Ansteuerschaltung eine Steuereinheit vorgeschaltet, die aufgrund des mit dem Messstrom beaufschlagten Zündmittel gemessenen Spannungsabfalls den Widerstandswert des Zündmittels bestimmt.

Im folgenden soll das erfindungsgemäße Verfahren und die erfindungsgemäße Vorrichtung anhand von Schaltungsanordnungen und Signaldarstellungen im Zusammenhang mit Zeichnungen erläutert werden.

Es zeigen:

Figur 1    eine erfindungsgemäße Schaltungsanordnung,

Figur 2    ein Zeit-Stromdiagramm zur Erläuterung der Funktionsweise der Schaltungsanordnung nach Figur 1,

Figur 3    ein Zeit-Energie- bzw. Zeit-Leistungsdiagramm zur Erläuterung der Funktionsweise der Schaltungsanordnung nach Figur 1,

Figur 4    ein weiteres Zeit-Energie- bzw. Zeit-Leistungsdiagramm,

Figur 5    ein Balkendiagramm zur Energieaufnahme von 4 Zündpillen mit jeweils einem Widerstand von 6,6 Ohm,

Figur 6    ein weiteres Balkendiagramm zur Energieaufnahme von vier Zündpillen mit jeweils einem Widerstand von 6,6 Ohm, dem jeweils ein Vorwiderstand vorgeschaltet ist,

Figur 7    ein Blockschaltbild zur Erzeugung von unterschiedlichen Taktsignalen A0, A1 und A2, und

Figur 8    eine Schaltungsanordnung eines Kodierteils zur Erzeugung von unterschliedlichen PWM-Signalen aus den mit der Schaltungsanordnung nach Figur 8 erzeugten Taktsignalen A0, A1 und A2, und

Figur 9    ein detailliertes Schaltbild zur Durchführung des erfindungsgemäßen Verfahrens.

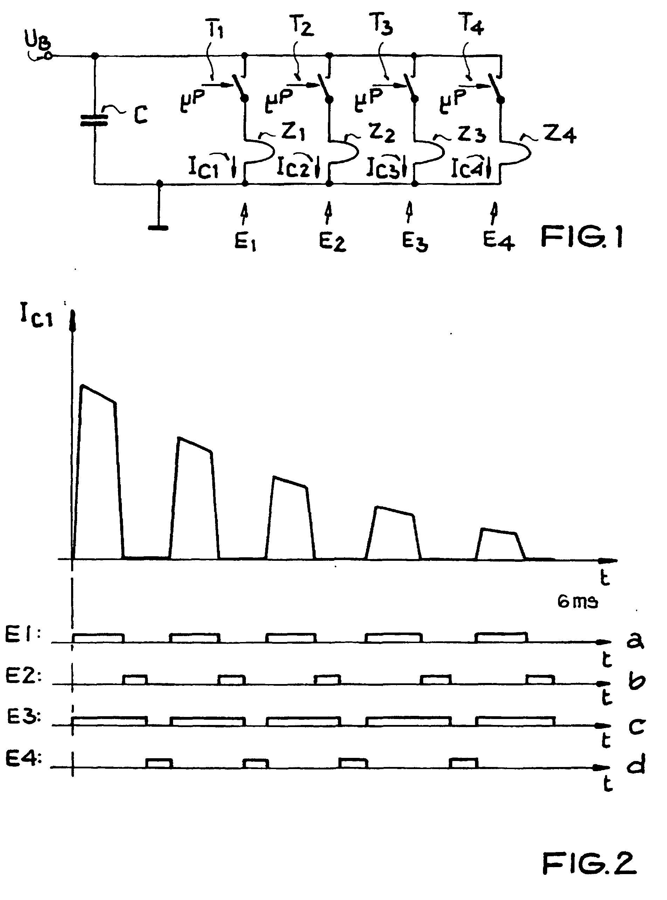

Den prinzipiellen Aufbau einer Auslöseschaltung mit vier Endstufen E1, E2, E3 und E4 zeigt die Figur 1, wo 4 Zündmittel Z1 bis Z4 mit jeweils in Reihe geschalteten Endstufentransistoren T1 bis T4 zu einem Autarkiekondensator C parallel geschaltet sind. Dieser Autarkiekondensator C wird über eine Betriebsspannung $U_B$, die die Bordbatterie oder ein von der Bordbatterie gespeistes Netzteil darstellen kann, geladen. Die Endstufentransistoren T1 bis T4 sind jeweils über eine Leitung mit einem Mikroprozessor µP (Mikroprozessor ist nicht dargestellt) individuell angesteuert.

Diese Endstufentransistoren T1 bis T4 werden mit einem PWM-Signal angesteuert, so daß sie nicht permanent geschlossen sind, sondern intermittierend sich im geöffneten oder geschlossenen Zustand befinden. Dabei ergibt sich ein zerhackter Verlauf der von dem Kondensator C gelieferten Entladeströme $I_{C1}$, $I_{C2}$, $I_{C3}$ und $I_{C4}$, wie dies beispielhaft in dem Zeit-Strom-Diagramm der Figur 2a für den Entladestrom $I_{C1}$, der Endstufe E1 dargestellt ist. Die Figuren 2b, 2c und 2d zeigen dagegen lediglich die zugehörigen Stromflußzeiten durch die Zündmittel Z2, Z3 und Z4. Dabei sind diese Stromflußzeiten so gewählt, daß jedes Zündmittel Z1 bis Z4 mit ausreichender Energie versorgt wird, so daß eine sichere Zündung gewährleistet ist. Aus dieser Figur 2 ist leicht zu erkennen, daß den Endstufen, die aus einem Endstufentransistor $T_i$ (i =1-4) und einem Zündmittel $Z_i$ (i = 1-4) bestehen unterschiedliche Pulsverteilungen zugeteilt werden, wobei sich die jeder Endstufe zugeteilte Impulsverteilung nach dem Widerstandswert des Zündmittels $Z_i$ (i = 1-4) richtet.

Als Randbedingung für die Dimensionierung des Autarkiekondensators C gilt, daß auch bei ungünstiger Verteilung der Widerstandswerte, das heißt, wenn alle Widerstandswerte der Zündmittel Z1 bis Z4 am obersten vorkommenden Widerstandswert von zum Beispiel 6,6 Ohm liegt, die Energie für alle Zündmittel Z1 bis Z4 ausreichen muß. Die Gesamtenergie $W_{ges}$ ergibt sich mit den angenommenen Werten nach der Formel:

$$W_{ges} = 0{,}024 \text{ Ws}* \left( \frac{R_1}{\Omega} + \frac{R_2}{\Omega} + \frac{R_3}{\Omega} + \frac{R_4}{\Omega} \right)^2 = 0{,}154 \text{ bzw. } 0{,}634 \text{ Ws,} \tag{1}$$

wobei R1 bis R4 die jeweiligen Widerstandswerte der Zündmittel Z1 bis Z4 darstellen und der Energiewert von 0,154 Ws bzw. 0,634 Ws sich für Zündmittel Z1 bis Z4 mit kleinstem Widerstandswert von 1,6 Ohm bzw. mit größtem Widerstandswert von 6,6 Ohm ergibt.

Geht man von einem sinnvollen Kapazitätswert für den Autarkiekondensator C von beispiesweise 4700 μF aus, so folgt für eine maximal benötigte Gesamtenergie von 0,634 Ws eine Ladespannung von 18,5 V. Die Endstufentransistoren T1 bis T4 müssen dann jeweils für einen Strom von 11,57 A ausgelegt werden.

Damit ergibt sich gegenüber dem Stand der Technik, wo jeweils für jede Endstufe ein separater Autarkiekondensator eingesetzt wird, eine Reduzierung des Stromes und somit auch eine Reduzierung der für die Endstufentransistoren erforderlichen Chipfläche. Geht man im Stand der Technik von einem Autarkiekondensator für eine einzelne Endstufe von 2.200 μF mit einer Ladespannung von 27 V aus, so ergibt sich im ungünstigsten Fall im Bezug auf die Widerstandswerte der Zündmittel ein maximaler Strom von 16,8 A.

Die für die Ansteuerung der Endstufentransistoren T1 bis T4 verwendeten PWM-Signale weisen eine Pulsdauer von 33 μs auf, wobei dann eine Teilung auf der Basis von 3 Bit - das eine Teilung auf der Basis von 1/8 ergibt - vorgenommen. Damit ergibt sich ein Puls-Pausenverhältnis von 1/8 bis 8/8 und somit auch eine endsprechende Zuteilung der Energie.

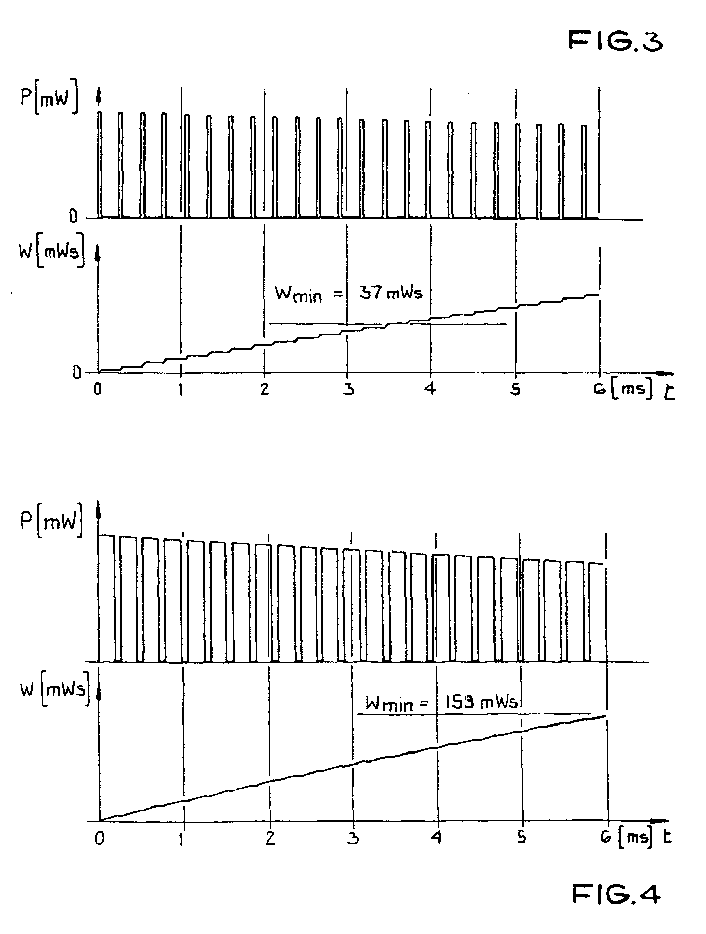

Hierzu zeigt Figur 3 die Energie - bzw. Leistungsaufnahme eines Zündmittels $Z_i$ mit einem Widerstandswert von 1,6 Ohm aus einem Autarkiekondensator C mit 4700 μF und einer Ladespannung von 18,5 V. Dabei beträgt das Puls-Pausenverhältnis des PWM-Signals 1/8, wie aus dem Zeit-Leistungsdiagramm der Figur 3 ersichtlich ist.

Aus dem Zeit-Energiediagramm der gleichen Figur erkennt man, daß die minimal erforderliche Energie $W_{min}$ von 37 mWs sicher erreicht, aber nur geringfügig überschritten wird, so daß kaum Energieverschwendung stattfindet.

In einem zweiten Beispiel gemäß Figur 4 wird noch die Energieaufnahme eines Zündmittels $Z_i$ mit einem maximalen Widerstand von 6,6 Ohm aus einem Autarkiekondensator mit der zuvor angegebenen Dimensionierung dargestellt.

Das obere Diagramm der Figur 4 zeigt die Leistungsaufnahme bei Verwendung eines PWM-Signals mit einem Puls-Pausenverhältnis von 6/8. Mit einem solchen PWM-Signal wird die erforderliche Energie von $W_{min}$ von 159 mWs gerade noch erreicht. In diesem Fall könnte aus Sicherheitsgründen eine etwas höhere Kapazität oder eine höher Ladespannung verwendet werden.

Schließlich soll noch die Energieaufnahme für 4 parallel geschaltete Endstufen gemäß Figur 1 aufgezeigt werden, wobei vom ungünstigsten Fall mit einem Widerstandswert der Zündmittel Z 1 bis Z4 von jeweils 6,6 Ohm ausgegangen wird. Der Autarkiekondensator C weist eine Kapazität von 4700 μF auf und wird mit einer Ladespannung von 21 V geladen. Das Balkendiagramm nach 5 zeigt die entsprechende Energieverteilung für die Zündmittel Z1, Z2, Z3 und Z4. Dabei zeigt jeweils der linke Balken die Ist-Energieaufnahme und die rechten Balken die erforderliche Mindestenergie als Sollwert. Die entsprechenden Puls-Pausenverhältnisse der PWM-Signale für die Zündmittel Z1, Z2, Z3 bzw. Z4 sind 4/8, 5/8, 6/8 bzw. 8/8.

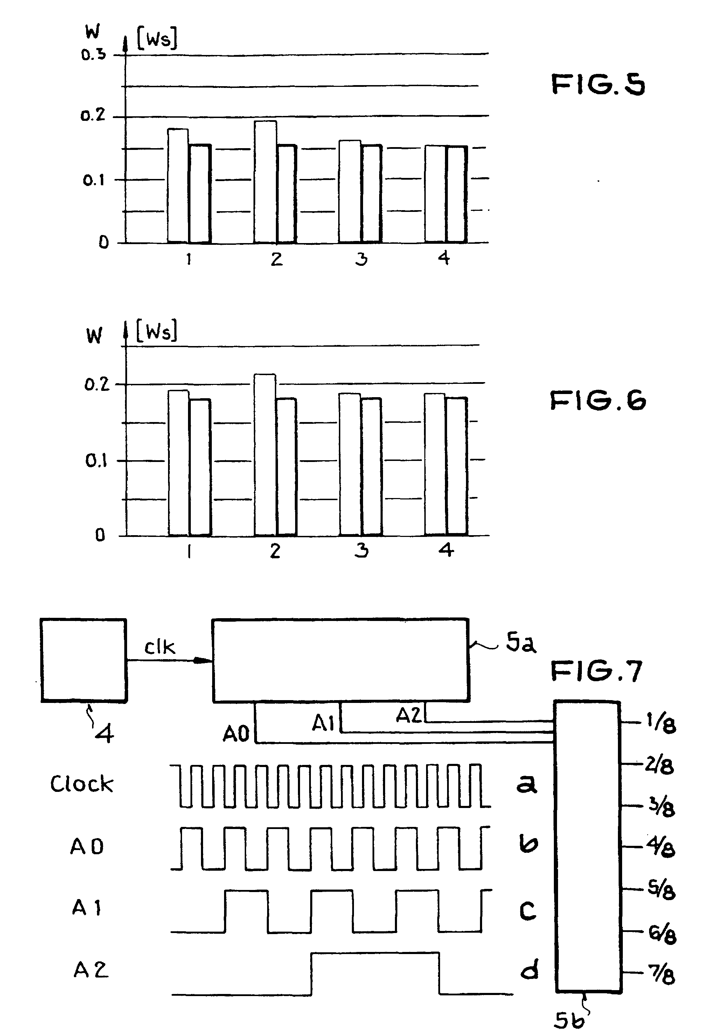

Die Figur 5 zeigt, daß damit eine nahezu optimale Energieverteilung bezüglich den erforderlichen Mindestenergien erreicht wird.

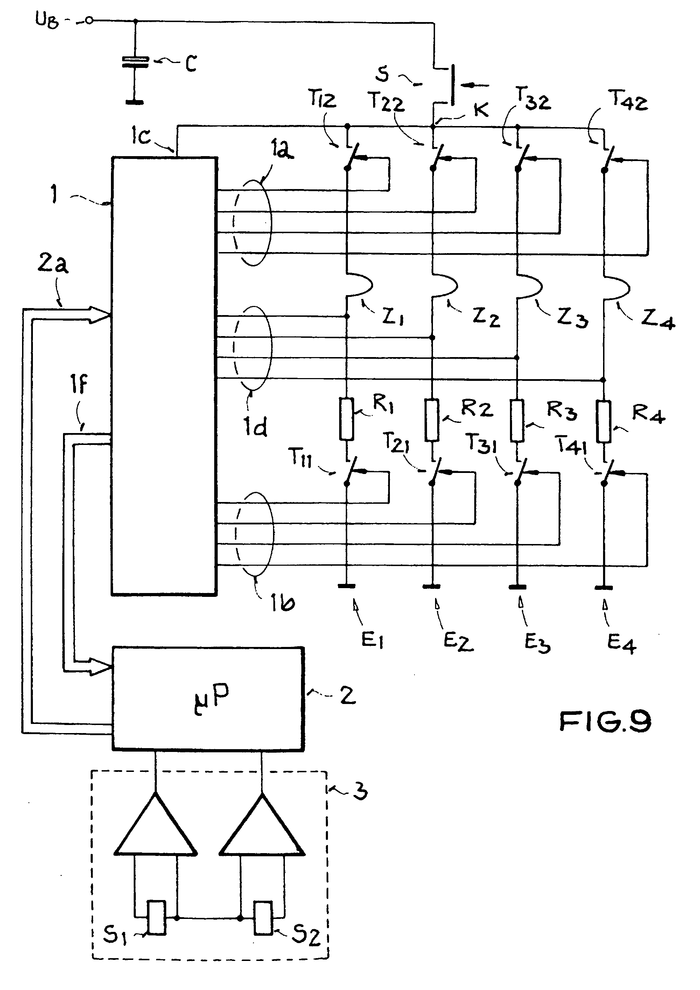

Beim Schmelzen einer Zündpille im Auslösefall kann dies zu kurzzeitigen Verbindungen nach Masse kommen, so daß - zumindest theoretisch - ein unbegrenzter Kurzschlußstrom fließt. Damit besteht die Gefahr, daß der Autarkiekondensator C unkontrolliert Energie verliert. Um einen solchen Fall zu vermeiden, werden zusätzliche Widerstände in Reihe zu den Zündmitteln Z1 bis Z4 (vergleiche Figur 9, Bezugszeichen R1 bis R4) beschaltet. Damit erhöhen sich die möglichen Widerstandswerte der Zündmittel Z1 bis Z4 von 1,6 bis 6.6 Ohm auf 2,6 bis 7,6 Ohm für solche Vorwiderstände mit jeweils einem Widerstandswert von 1 Ohm. Dabei wächst die maximal benötigte Gesamtenergie auf 0,73 Ws.

Eine entsprechende Energieverteilung zeigt das Balkendiagramm nach Figur 6, wobei Widerstandswerte von jeweils 1,6 Ohm für die Zündmittel Z1 bis Z4 angenommen wird, und der Autarkiekondensator C einen Kapazitätswert von 4.700 µF aufweist (Ladespannung 23 V). Die Puls-Pausenverhältnisse der entsprechenden PWM-Signale entsprechen den Werten 4/8, 5/8, 6/8 und 8/8. Dabei erreicht der Maximalstrom bei 2,6 Ω einen Wert von 8,85 A. Auch bei diesem Ausführungsbeispiel ist ersichtlich, daß die Energieverteilung aus dem Kondensator C auf die vier Zündmittel Z1 bis Z4 nahezu optimal ist, und somit auch wenig Energie verschwendet wird.

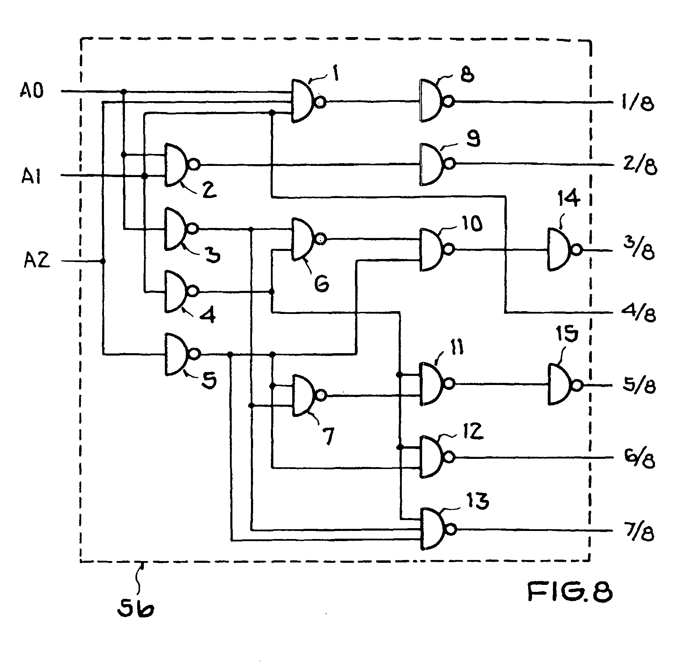

Die Schaltungsanordnungen nach Figur 7 und Figur 8 zeigen, wie PWM-Signale mit einer 1/8-Teilung erzeugt werden können. Nach Figur 7 besteht eine solche Anordnung aus einem Taktgenerator 4 zur Erzeugung eines Taktsignales c/k (vergleiche Figur 7a), das einem 3 Bit-Zähler 5 zugeführt wird. An den Ausgängen A0, A1 und A2 dieses Zählers 5 stehen heruntergeteilte Taktsignale, wie sie in den Figuren 7b, 7c und 7d dargestellt sind, zur Verfügung. Diese Taktsignale werden einem Kodierteil 6 zugeführt, der hieraus die PWM-Signale mit den entsprechenden Puls-Pausen-Verhältnissen erzeugt. Ein detailliertes Schaltbild eines solchen Kodierteils 6 zeigt Figur 8, das vollständig aus NAND-Gattern aufgebaut ist. Es erzeugt alle mit 3 Bit darstellbaren Puls-Pausen-Verhältnisse eines PWM-Signals.

Im einzelnen ist diese Kodierschaltung 6 folgendermaßen aufgebaut: Das Taktsignal A0 wird einem NAND-Gatter 1, einem NAND-Gatter 2 und einem NAND-Gatter 3 zugeführt. Das zweite Taktsignal A1 liegt an einem Eingang des NAND-Gatter 1, des NAND-Gatters 2 und am Eingang eines NAND-Gatters 4, wobei dieses Taktsignal gleichzeitig das PWM-Signal mit einem Puls-Pausen-Verhältnis von 4/8 darstellt. Schließlich wird das 3. Taktsignal A2 ebenfalls dem NAND-Gatter 1 und einem NAND-Gatter 5 zugeführt.

Im weiteren führt der Ausgang des NAND-Gatters 3 auf ein NAND-Gatter 6, ein NAND-Gatter 7 und ein NAND-Gatter 13. Der Ausgang des NAND-Gatters 4 ist dagegen mit einem Eingang des NAND-Gatters 6, eines NAND-Gatters 11, eines NAND-Gatters 12 und des NAND-Gatters 13 verbunden. Der Ausgang des NAND-Gatters 5 ist mit dem Eingang eines NAND-Gatters 10, mit einem Eingang des NAND-Gatters 7, mit einem Eingang des NAND-Gatters 12 und mit einem Eingang des NAND-Gatters 13 verbunden.

Der Ausgang des NAND-Gatters 1 führt zu einem NAND-Gatter 8, der Ausgang des NAND-Gatters 2 zu einem NAND-Gatter 9, der Ausgang des NAND-Gatters 6 zu einem Eingang des NAND-Gatters 10 und der Ausgang des NAND-Gatters 7 zu einem Eingang des NAND-Gatters 11.

Am Ausgang des NAND-Gatters 8 bzw. des NAND-Gatters 9 liegt ein PWM-Signal mit einem Puls-Pausen-Verhältnis von 1/8 bzw. 2/8 an. Der Ausgang des NAND-Gatters 10 ist mit einem NAND-Gatter 14 verbunden, an dem ein PWM-Signal mit einem Puls-Pausen-Verhältnis von 3/8 erzeugt wird. Ein PWM-Signal mit einem Puls-Pausen-Verhältnis von 5/8 wird von einem dem NAND-Gatter 11 nachgeschalteten NAND-Gatter 15 erzeugt. Das NAND-Gatter 12 liefert ein PWM-Signal mit einer 6/8-Teilung und schließlich liefert das NAND-Gatter 13 ein PWM-Signal mit einem Puls-Pausen-Verhältnis von 7/8.

Mit Figur 9 wird ein detailliertes Schaltbild mit vier parallel geschalteten Zündendstufen E1, E2, E3 und E4 als Auslöseschaltung dargestellt, die von einer Ansteuerschaltung 1 und einer als Microprozessor ausgebildeten Steuereinheit 2 gesteuert werden.

Jede Zündendstufe $E_i$, (i = 1-4) ist aus einer Reihenschaltung eines Zündmittels $Z_i$ (i=1-4) als Zündpille für einen Airbag oder einen Gurtstraffer, einem Widerstand $R_i$ (i=1-4) sowie einem High-Side-Endstufentransistor $T_{i2}$ (i=1-4) und einem Low-Side-Endstufentransistor $T_{i1}$ (i = 1-4) aufgebaut. Diese Parallelschaltung aus 4 Endstufen E1 bis E4 liegt in Reihe zu einem Sicherheitsschalter S, der seinerseits mit einem Autarkiekondensator C bzw. einer Betriebsspannung $U_B$ verbunden ist.

Jeder der HIGH-Side-Endstufentransistoren T12, T22, T32 und T42 wird jeweils über eine Steuerleitung 1a von der Ansteuerschaltung 1 angesteuert. Entsprechend gilt dies für die LOW-Side-Endstufentransistoren T11 bis T41 mit jeweils einer Steuerleitung 1b.

Um die Widerstandswerte der Zündpillen Z1-Z4 bestimmen zu können, sind einerseits diese Zündpillen Z1 bis Z4 über Jeweils eine Leitung 1d mit der Ansteuerschaltung 1 verbunden als auch der Knotenpunkt K der Parallelschaltung mit einer Leitung 1c. Die in den Endstufen angeordneten Widerstände R1 bis R4 dienen zur Begrenzung eines bei der Zündung der einzelnen Zündpillen Z1 bis Z4 möglicherweise auftretenden kurzzeitigen Kurzschlußstromes, wie dies im Zusammenhang mit der Erläuterung der Figur 6 dargelegt wurde. Die mit der Ansteuerschaltung 1 bestimmten Spannungsabfälle über den Zündpillen Z1 bis Z4 werden über eine Leitung 1f dem Mikroprozessor 2 zur Bestimmung der entsprechenden Widerstandswerte zugeführt. Hieraus wird ebenfalls von dem Mikroprozessor 2 die PWM-Signale mit den zugehörigen Puls-Pausen-Verhältnissen bestimmt und über eine Leitung 2a der Ansteuerschaltung 1 zugeführt, die ihrerseits über die Steuerleitungen 1a und 1b die jeweiligen Endstufentransistoren T12 bis T42 bzw. T11 bis T41 ansteuert. Zur Detektierung der auf ein Kraftfahrzeug wirkenden Beschleunigungen ist eine Sensoreinheit 3 mit Beschleunigungssensoren S1 und S2 vorgesehen, deren Sensorsignale zur Auswertung dem Mikroprozessor 2 zugeführt werden. Falls aufgrund der detektierten Beschleunigungen vom Mikroprozessor 2 ein die Insassen gefährdender Crash festgestellt wird, wird ein Auslösesignal über die Leitung 2a an die Ansteuerschaltung 1 gesendet, so daß über die Steuerleitungen 1a und 1b die Zündpillen Z1 bis Z4 aktiviert werden.

Die oben dargestellten Ausführungsbeispiele zur Erläuterung des erfindungsgemäßen Verfahrens zeigen jeweils nur 4 parallel geschaltete Endstufen, die mit einem PWM-Signal auf der Basis von 3 Bit angesteuert werden. Das erfindungsgemäße verfahren beschränkt sich jedoch nicht auf die Parallelschaltung von 4 Endstufen, sondern kann bei endsprechender Auslegung des Autarkiekondensators C auf eine geringere Anzahl von parallel geschalteten Stufen oder auf eine höhere Anzahl von parallelgeschalteten Stufen angewendet werden, wobei auch die Basis von 3 Bit für das PWM-Signal geändert werden kann.

**Patentansprüche**

1. Verfahren zur Auslösung eines passiven Insassen-Schutzsystems für Kraftfahrzeuge, bei dem elektrische Zundmittel für eine Person im Falle eines gefährlichen Aufpralls schützende Mittel, insbesondere Airbag, Gurtstraffer, zur Zuführung von Zündenergie mit Auslösestrom beaufschtagt werden,
   der bei Funktionsstörungen des Bordnetzes des Kraftfahrzeuges als Entladestrom eines Autarkiekondensators (C) erzeugt wird,
   wobei dieser Autarkiekondensator (C) für mehrere Zündmittel ($Z_1$, $Z_2$, $Z_3$, $Z_4$) gleichzeitig die Auslöseströme zur Verfügung stellt,
   **dadurch gekennzeichnet, daß**
   der Auslösestrom eines jeden Zündmittels ($Z_1$, $Z_2$, $Z_3$, $Z_4$) individuell derart pulsweitenmoduliert wird, dass die für das jeweilige Zündmittel ($Z_1$, $Z_2$, $Z_3$, $Z_4$)entsprechend seinem Widerstandswert individuell erforderliche Zündenergie über das Puls-Pausenverhältnis des Auslösestroms eingestellt wird, derart daß die zur Zündung des jeweiligen Zündmittels minimal erforderliche Zündenergie siche erreicht, aber nur geringfügig überschritten wird, so daß kann Energie-Verschwendung stattfindet.

2. Verfahren nach Anspruch 1, **dadurch gekennzeichnet, daß** während des Betriebes des Kraftfahrzeugs der Wi-derstandswert des Zündmittels ($Z_1$, $Z_2$, $Z_3$, $Z_4$) bestimmt wird und daß hieraus die für das Zündmittel individuell erforderliche Zündenergie als Puls-Pausenverhältnis für den Auslösestrom festgelegt wird.

3. Passives Insassen-Schutzsystem für Kraftfahrzeuge mit:

   (a) elektrischen Zündmitteln ($Z_1$, $Z_2$, $Z_3$, $Z_4$) für eine Person im Falle eines gefährlichen Aufpralls schützende Mittel, insbesondere Airbag, Gurtstraffer,
   (b) Mittel ($U_B$, C) zur Beaufschlagung der elektrischen Zündmittel ($Z_1$, $Z_2$, $Z_3$, $Z_4$) mit Auslösestrom, mit einem Autarkiekondensator (C) zur Erzeugung des Auslösestroms als Entladestrom bei Funktionsstörungen des Bordnetzes des Kraftfahrzeuges, wobei der Autarkiekondensator (C) geeignet ist, für mehrere Zündmittel ($Z_1$, $Z_2$, $Z_3$, $Z_4$)gleichzeitig die Auslöseströme zur Verfügung zu stellen,
   (c) wenigstens einem, in Reihe zu jedem Zündmittel ($Z_1$, $Z_2$, $Z_3$, $Z_4$) geschalteten, steuerbaren Schalter ($T_{11}$, $T_{12}$, $T_{21}$, $T_{22}$, $T_{31}$, $T_{32}$, $T_{41}$, $T_{42}$), und
   (d) einer Ansteuerschaltung (1) zur Ansteuerung der steuerbaren Schalter,
   **dadurch gekennzeichnet dass**
   (e) die Ansteuerschaltung (1) die steuerbaren Schalter jeweils individuell derart mit einem pulsweitenmodulierten Signal ansteuert, dass die für das jeweilige Zündmittel ($Z_1$, $Z_2$, $Z_3$, $Z_4$) entsprechend seinem Wider-standswert individuell erforderliche Zündenergie über das Puls-Pausenverhältnis des Auslösestroms eingestellt wird, derart daß die zur Zündung des jeweiligen Zündmittels minimal erforderliche Zündenergie siche erreicht, aber nur geringfügig überschritten wird, so daß kaum Energieverschwendung stattfindet.

4. Passives Insassen-Schutzsystem nach Anspruch 3, **dadurch gekennzeichnet, dass** die Ansteuerschaltung (1) Mittel zur Beaufschlagung des Zündmittels (Z1, Z2, Z3, Z4) mit einem keine Zündung auslösenden Messstrom zur Bestimmung des zugehörigen Spannungsabfalls über dem Zündmittel (Z1, Z2, Z3, Z4) aufweist.

5. Passives Insassen-Schutzsystem nach Anspruch 4, **dadurch gekennzeichnet, dass** eine Steuereinheit (2) der Ansteuerschaltung (1) vorgeschaltet ist, die aus dem Spannungsabfall an den Zündmitteln (Z1, Z2, Z3, Z4) den Widerstand des jeweiligen Zündmittels (Z1, Z2, Z3, Z4) bestimmt.

**Claims**

1. Method of triggering a passive passenger protection system for motor vehicles, whereby, for supplying ignition energy, tripping current is applied to electrical ignition means for means of protecting a person in the event of a dangerous impact, in particular air bags, seat-belt tensioners,

which tripping current in the event of malfunction of the on-board power supply of the motor vehicle is generated as discharging current of an independent capacitor (C),

wherein said independent capacitor (C) provides the tripping currents for a plurality of ignition means ($Z_1$, $Z_2$, $Z_3$, $Z_4$) simultaneously,

**characterized in that**

the tripping current of each ignition means ($Z_1$, $Z_2$, $Z_3$, $Z_4$) is individually subjected to pulse-duration modulation in such a way that the ignition energy, which is individually required for the respective ignition means ($Z_1$, $Z_2$, $Z_3$, $Z_4$) in accordance with its resistance value, is set by means of the mark-to-space ratio of the tripping current, such that the minimum ignition energy required to ignite the respective ignition means is reliably achieved but is only slightly exceeded, so that hardly any waste of energy occurs.

2. Method according to claim 1, **characterized in that** during operation of the motor vehicle the resistance value of the ignition means ($Z_1$, $Z_2$, $Z_3$, $Z_4$) is determined and that from said resistance value the ignition energy individually required for the ignition means is defined as a mark-to-space ratio for the tripping current.

3. Passive passenger protection system for motor vehicles having:

a) electrical ignition means ($Z_1$, $Z_2$, $Z_3$, $Z_4$) for means of protecting a person in the event of a dangerous impact, in particular air bags, seat-belt tensioners,

b) means ($U_B$, C) of applying tripping current to the electrical ignition means ($Z_1$, $Z_2$, $Z_3$, $Z_4$), comprising an independent capacitor (C) for generating the tripping current as discharging current in the event of malfunction of the on-board power supply of the motor vehicle, wherein the independent capacitor (C) is suitable for providing the tripping currents for a plurality of ignition means ($Z_1$, $Z_2$, $Z_3$, $Z_4$) simultaneously,

c) at least one controllable switch ($T_{11}$, $T_{12}$, $T_{21}$, $T_{22}$, $T_{31}$, $T_{32}$, $T_{41}$, $T_{42}$) connected in series to each ignition means ($Z_1$, $Z_2$, $Z_3$, $Z_4$), and

d) a control circuit (1) for controlling the controllable switches,

**characterized in that**

e) the control circuit (1) controls the controllable switches in each case individually in such a way with a pulse-duration-modulated signal that the ignition energy, which is individually required for the respective ignition means ($Z_1$, $Z_2$, $Z_3$, $Z_4$) in accordance with its resistance value, is set by means of the mark-to-space ratio of the tripping current, such that the minimum ignition energy required to ignite the respective ignition means is reliably achieved but is only slightly exceeded, so that hardly any waste of energy occurs.

4. Passive passenger protection system according to claim 3, **characterized in that** the control circuit (1) comprises means of applying a measurement current, which does not trigger ignition, to the ignition means ($Z_1$, $Z_2$, $Z_3$, $Z_4$) in order to determine the associated voltage drop via the ignition means ($Z_1$, $Z_2$, $Z_3$, $Z_4$).

5. Passive passenger protection system according to claim 4, **characterized in that** connected upstream of the control circuit (1) is a control unit (2), which from the voltage drop at the ignition means ($Z_1$, $Z_2$, $Z_3$, $Z_4$) determines the resistance of the respective ignition means ($Z_1$, $Z_2$, $Z_3$, $Z_4$).

**Revendications**

1. Procédé pour déclencher un système de protection passif d'occupant pour des véhicules automobiles dans lequel des moyens d'allumage électrique pour des moyens protégeant une personne en cas d'une collision dangereuse, en particulier airbag, tensionneur de ceinture, sont alimentés avec un courant de déclenchement pour amener l'énergie d'allumage, courant qui, lors de perturbations fonctionnelles du réseau de bord du véhicule automobile, est généré sous forme de courant de décharge d'un condensateur autarcique (C), ce condensateur autarcique (C) mettant simultanément à disposition les courants de déclenchement pour plusieurs moyens d'allumage ($Z_1$, $Z_2$, $Z_3$, $Z_4$), **caractérisé en ce que** le courant de déclenchement de chacun des moyens d'allumage ($Z_1$, $Z_2$, $Z_3$, $Z_4$) est modulé individuellement en largeur d'impulsion de sorte que l'énergie d'allumage individuellement nécessaire pour le moyen d'allumage respectif ($Z_1$, $Z_2$, $Z_3$, $Z_4$) est ajustée en correspondance à sa valeur de résistance via le rapport impulsion-pause du courant de déclenchement, de sorte que l'énergie d'allumage minimale nécessaire pour allumer le moyen d'allumage respectif est sûrement atteinte, mais n'est dépassée que légèrement, de manière à éviter un gaspillage d'énergie.

**2.** Procédé selon la revendication 1, **caractérisé en ce que** la valeur de résistance du moyen d'allumage ($Z_1$, $Z_2$, $Z_3$, $Z_4$) est déterminée pendant la marche du véhicule automobile et qu'à partir de cela, l'énergie d'allumage individuellement nécessaire pour le moyen d'allumage est définie comme rapport impulsion-pause pour le courant de déclenchement.

**3.** Système de protection passif d'occupants pour véhicules automobiles comprenant :

(a) des moyens d'allumage électrique pour des moyens protégeant une personne en cas d'une collision dangereuse, en particulier airbag, tensionneur de ceinture ;

(b) des moyens ($U_b$, C) pour alimenter des moyens d'allumage électrique ($Z_1$, $Z_2$, $Z_3$, $Z_4$) en courant de déclenchement, comprenant un condensateur autarcique (C), pour générer le courant de déclenchement comme courant de décharge, lors de perturbations fonctionnelles du réseau de bord du véhicule automobile, le condensateur autarcique (C) étant approprié pour mettre simultanément à disposition les courants de déclenchement pour plusieurs moyens d'allumage ($Z_1$, $Z_2$, $Z_3$, $Z_4$);

(c) au moins un commutateur ($T_{11}$ $T_{12}$, $T_{21}$, $T_{22}$, $T_{31}$, $T_{32}$, $T_{41}$, $T_{42}$) monté en série sur chaque moyen d'allumage ($Z_1$, $Z_2$, $Z_3$, $Z_4$) et pouvant être commandé ; et

(d) un circuit de pilotage (1) pour piloter les commutateurs pouvant être commandés,
**caractérisé en que :**

(e) le circuit de pilotage (1) pilote respectivement et individuellement les commutateurs pouvant être commandés avec un signal modulé en largeur d'impulsion de sorte que l'énergie d'allumage individuellement nécessaire pour le moyen d'allumage respectif ($Z_1$, $Z_2$, $Z_3$, $Z_4$) est ajustée en correspondance à sa valeur de résistance via le rapport impulsion-pause du courant de déclenchement, de sorte que l'énergie d'allumage minimale nécessaire pour allumer le moyen d'allumage respectif est sûrement atteinte, mais n'est dépassée que légèrement, de manière à éviter un gaspillage d'énergie.

**4.** Système de protection passif d'occupant selon la revendication 3, **caractérisé en ce que** le circuit de pilotage (1) présente des moyens pour alimenter le moyen d'allumage ($Z_1$, $Z_2$, $Z_3$, $Z_4$) avec un courant de mesure qui ne déclenche aucun allumage pour définir la chute de tension correspondante à travers le moyen d'allumage ($Z_1$, $Z_2$, $Z_3$, $Z_4$).

**5.** Système de protection passif d'occupant selon la revendication 4, **caractérisé en ce qu'**une unité de commande (2) est branchée en amont du circuit de pilotage (1), laquelle détermine la résistance du moyen d'allumage respectif ($Z_1$, $Z_2$, $Z_3$, $Z_4$) à partir de la chute de tension au niveau des moyens d'allumage ($Z_1$, $Z_2$, $Z_3$, $Z_4$).

FIG.1

FIG.2

FIG.3

$P[mW]$

$W[mWs]$

$W_{min} = 37 \text{ mWs}$

0  1  2  3  4  5  6 [ms] $t$

$P[mW]$

$W[mWs]$

$W_{min} = 159 \text{ mWs}$

0  1  2  3  4  5  6 [ms] $t$

FIG.4

FIG.5

FIG.6

FIG.7

FIG.8

FIG.9